# EUROPÄISCHE PATENTSCHRIFT

(11) **EP 0 880 152 B1**
(45) Veröffentlichungstag und Bekanntmachung des Hinweises auf die Patenterteilung: **02.08.2000**
(21) Anmeldenummer: 98108246.4
(22) Anmeldetag: 06.05.1998
(51) Int. Cl.: H01G 2/02, H01G 2/10

(54) **Verfahren zum Herstellen eines SMD-Kunststoffolienkondensators**
Method of manufacturing an SMD-plastic film capacitor
Méthode de fabrication d'un condensateur à film plastique destiné au montage en surface

(30) Priorität: 23.05.1997 DE 19721678
(43) Veröffentlichungstag der Anmeldung: 25.11.1998
(73) Patentinhaber: Westermann, Wolfgang, 68165 Mannheim (DE)
(72) Erfinder: Westermann, Wolfgang, 68165 Mannheim (DE)
(74) Vertreter: Altenburg, Udo, Dipl.-Phys.

(56) Entgegenhaltungen:
- EP-A- 0 192 818
- EP-A- 0 434 451
- DE-A- 2 230 859
- DE-U- 8 612 909
- PATENT ABSTRACTS OF JAPAN vol. 015, no. 315 (E-1099), 12.August 1991 & JP 03 116812 A (ELNA CO LTD;OTHERS: 01), 17.Mai 1991,

## Beschreibung

Die vorliegende Erfindung betrifft ein Verfahren zum Herstellen eines SMD-Kunststoffolienkondensators in Wickel- oder Schichtbauweise gemäß Oberbegriff des Anspruchs 1, wie es z.B. aus dem DE-GM 86 12 909 bekannt ist.

Aus der EP-130 386 B1 ist ein Kunststoffolien-Wickelkondensator in Chip-bzw. SMD-Bauweise mit einer Umhüllung aus duroplastischem Kunststoffmaterial bekannt. Aus der EP-0 192 818 B1 ist ein Kunststoffolien-Wickelkondensator in Chip- bzw. SMD-Bauweise mit einer gießharzvergossenen Becherumhüllung bekannt. Aus der EP-0 191 974 A2 und der EP-0 154 299 B1 sind Kunststoffolien-Wickelkondensatoren in Chip- bzw. SMD-Bauweise bekannt, die eine vollständige Umhüllung aus einem an den Stirnseiten mit Endkappen versiegelten Gehäuse aufweisen. Diese bekannten SMD-Kunststoffolienkondensatoren sind bezüglich ihres Material- und Herstellungsaufwandes noch verbesserungsfähig.

Darüber hinaus ist aus "Schichtarbeiter, W. Salz, Elektronik Praxis Nr. 8, 16.04.97, S. 42 bis 46 ein nackter bzw. nichtumhüllter SMD-Kunststoffolienkondensator in Schichtbauweise bekannt. Dieser bekannte Kondensator hat zweifellos ein relativ großes Beschädigungsrisiko unter den Temperaturbelastungen beim Lötvorgang auf einer Platine aufgrund der Delaminationsgefahr des Schichtpakets. Schließlich ist die begrenzte Langzeitzuverlässigkeit aufgrund des fehlenden Schutzes gegen klimatische Einflüsse bei diesem Kondensator verbesserungswürdig.

Bei dem aus dem DE-GM 86 12 909 bekannten Verfahren wird gemäß dem Ausführungsbeispiel der Figuren 1 und 2 von einer einseitig offenen gießharzvergossenen Becherumhüllung des Kondensatorkörpers ausgegangen. Der Kondensatorkörper ist bei diesem bekannten Verfahren also zunächst allseitig von isoliertem Material umschlossen. Erst durch eine zusätzliche Maßnahme, nämlich das Absägen der Umhüllung an den Stirnseiten des Kondensatorkörpers, werden die Schoopschichten so freigelegt, daß sie als Kontaktfläche dienen können. Hierbei entsteht Materialabfall.

Die vorliegende Erfindung ist darauf gerichtet, dieses bekannte Verfahren zum Herstellen eines SMD-Kunststoffolienkondensators in Wickel- oder Schichtbauweise zu vereinfachen.

Dies wird erfindungsgemäß durch ein Verfahren gemäß Anspruch 1 erreicht. Erfindungsgemäß wird der geschoopte nackte Kondensatorkörper unmittelbar in ein an beiden gegenüberliegenden Stirnseiten offenes Kunststoffgehäuse eingeführt, so daß erfindungsgemäß die aufwendige bekannte allseitige Umhüllung des Kondensatorkörpers mit Isoliermaterial und die anschließende bekannte Entfernung eines Teils des Isoliermaterials mit entsprechendem Materialabfall vermieden wird.

Vorteilhafte Ausführungsformen des erfindungsgemäßen Verfahrens sind in den Unteransprüchen 2 bis 7 angeführt.

Im Vergleich zu den bekannten umhüllten SMD-Kunststoffolienkondensatoren, wie sie oben gewürdigt worden sind, wird durch Einsparung von Material und Arbeitsgängen erfindungsgemäß eine kostengünstigere Herstellung der teilumhüllten SMD-Kunststoffolienkondensatoren erreicht. Darüber hinaus ergibt sich durch die Teilumhüllung des erfindungsgemäßen SMD-Kunststoffolienkondensators nur eine minimale Bauformvergrößerung im Vergleich zu nichtumhüllten SMD-Kunststoffolienkondensatoren, wobei jedoch gleichzeitig ein deutlich erhöhter Schutz gegen Temperaturbelastungen beim Lötvorgang und gegen klimatische Einflüsse im Dauerbetrieb beim erfindungsgemäßen teilumhüllten SMD-Kunststoffolienkondensator erzielt wird. Dies führt auch zu einer erheblich verbesserten Langzeitzuverlässigkeit des erfindungsgemäßen SMD-Kunststoffolienkondensators.

Weitere Vorteile und Anwendungsmöglichkeiten der vorliegenden Erfindung ergeben sich aus der nachfolgenden Beschreibung von Ausführungsbeispielen in Verbindung mit der Zeichnung. Darin zeigen:
- Figur 1: einen geschoopten nackten Kondensatorkörper und ein erfindungsgemäßes Kunststoffgehäuse vor ihrem Zusammenbau,
- Figur 2: den SMD-Kunststoffolienkondensator gemäß Figur 1 im zusammengebauten Zustand mit schematischer Darstellung des zusätzlichen Schoopvorgangs,
- Figur 3: eine der Figur 1 ähnliche Darstellung einer abgewandelten Ausführungsform der Erfindung, und
- Figur 4: der in Figur 3 dargestellte SMD-Kunststoffolienkondensator im zusammengebauten Zustand mit schematischer Darstellung der Anbringung zusätzlicher Blechanschlußelemente.

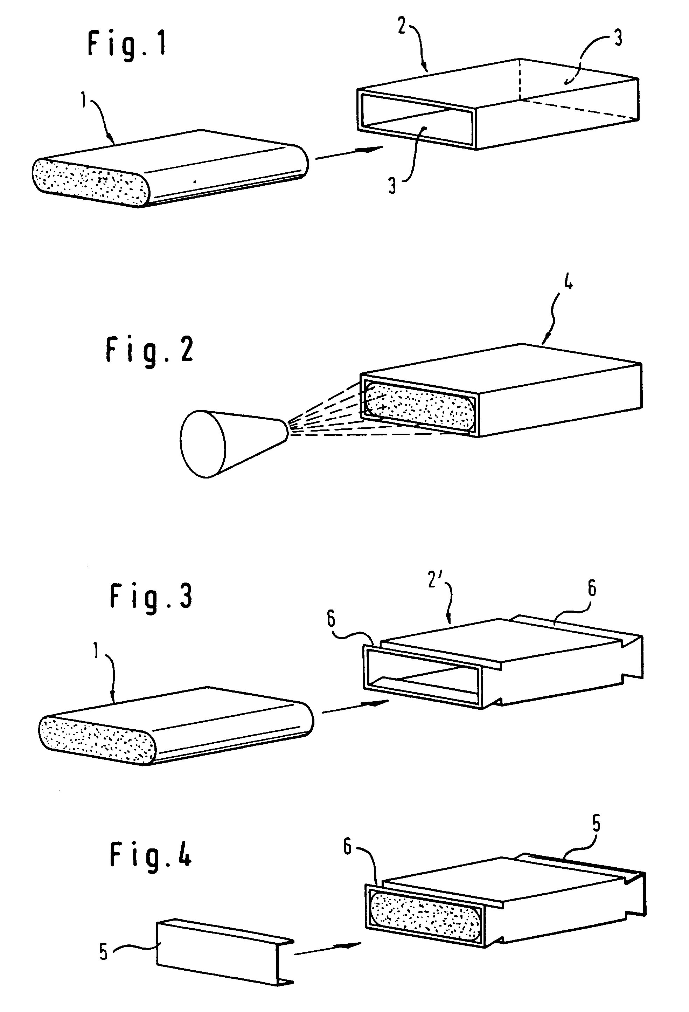

Wie in Figur 1 dargestellt ist, besteht der SMD-Kunststoffolienkondensator im wesentlichen aus zwei Elementen, nämlich aus einem geschoopten nackten Kondensatorkörper 1 und einem Kunststoffgehäuse 2 mit zwei offenen gegenüberliegenden Stirnseiten 3. Das Kunststoffgehäuse 2 besteht aus einem temperaturstabilen Material, z.B. neben duroplastischen auch thermoplastische Kunststoffe mit Schmelzpunkten oberhalb von 250°C, wie Polyphenylensulfid, Polyamid u.a. Wie in Figur 1 schematisch durch den Pfeil dargestellt, wird der geschoopte Kondensatorkörper 1 in das Kunststoffgehäuse 2 eingesetzt und dort in der richtigen Position durch geeignete, nicht dargestellte Hilfsmittel wie z.B. eine geeignete Gestaltung des Gehäuseinneren mit Hilfe elastischer nockenartiger Vorsprünge (Snap In Prinzip) oder durch ein Klebemittel fixiert. In dieser eingebauten Position entspricht der Abstand zwischen den beiden Schoopschichten des Kondensatorkörpers 1 im wesentlichen dem Abstand zwischen den zwei offenen gegenüberliegenden Stirnseiten 3 des Kunststoffgehäuses 2. Anschließend wird dieses Gebilde 4 nochmals an den beiden Stirnseiten des Kunststoffgehäuses 2 geschoopt, wie dies in Fig. 2 dargestellt ist, um lötfähige Kontaktflächen herzustellen.

In einem weiteren Verfahrensschritt kann dieses nochmals geschoopte Gebilde unter Druck oder Vakuum in flüssigem Gießharz leicht imprägniert werden, um Lufteinschlüsse, insbesondere zwischen dem Kondensatorkörper 1 und dem Kunststoffgehäuse 2 zu beseitigen und um die Feuchtesicherheit zu erhöhen. Abschließend nach der Aushärtung des Gießharzes erfolgt ein mechanisches Glätten der auf den Stirnseiten vorhandenen Schoopschichten durch Schleifen, Bürsten oder Fräsen, um eine geometrisch genau definierte und elektrisch einwandfreie Oberfläche für die Lötkontakierung zu schaffen.

In den Figuren 3 und 4 ist eine abgewandelte Ausführungsform des SMD-Kunststoffolienkondensators dargestellt. Bei dieser abgewandelten Ausführungsform wird anstelle der zusätzlichen Schoopschicht jeweils ein Anschlußelement 5 aus dünnem Blech angeordnet. Zur Befestigung der Anschlußelemente 5 werden deren Kanten in auf den großen Mantelflächen des Kunststoffgehäuses 2' angeordneten schwalbenschwanzartigen Hinterscheidungen 6 gefalzt. Anschließend werden die Anschlußelemente 5 mit der darunterliegenden Schoopschicht verschweißt.

Bei dieser Ausführungsform kann nach der Montage der Anschlußelemente 5 ebenfalls eine leichte Imprägnierung erfolgen, um Lufteinschlüsse zwischen dem Kondensatorkörper 1 und dem Kunststoffgehäuse 2' sowie zwischen den Anschlußelementen 5 und dem Kunststoffgehäuse 2' zu beseitigen und um die Feuchtesicherung und die Festigkeit des montierten Gebildes zu erhöhen. Vor oder nach Aushärtung des Gießharzes müssen dann durch einen geeigneten Waschprozeß die Anschlußelemente 5 von der isolierenden Schicht befreit werden.

## Patentansprüche

1. Verfahren zum Herstellen eines SMD-Kunststoffolienkondensators in Wickel- oder Schichtbauweise, dessen geschoopter Kondensatorkörper (1) in einem temperaturstabilen Kunststoffgehäuse (2) mit zwei offenen gegenüberliegenden Stirnseiten (3), an denen die Lötkontaktschichten vorgesehen sind, teilumhüllt ist, wobei der Abstand zwischen den beiden Schoopschichten des Kondensatorkörpers (1) im wesentlichen dem Abstand zwischen den zwei offenen gegenüberliegenden Stirnseiten (3) des Kunststoffgehäuses (2) entspricht,
**dadurch gekennzeichnet,** daß der geschoopte Kondensatorkörper (1) in das Kunststoffgehäuse (2) mit den zwei offenen gegenüberliegenden Stirnseiten eingesetzt wird.

2. Verfahren nach Anspruch 1, dadurch gekennzeichnet, daß anschließend beide Stirnseiten des so hergestellten Gebildes (4) nochmals geschoopt werden.

3. Verfahren nach Anspruch 2, dadurch gekennzeichnet, daß der Kondensatorkörper nach dem zweiten Beschoopen unter Druck oder Vakuum in flüssigem Gießharz leicht imprägniert wird, um Lufteinschlüsse zwischen dem Kondensatorkörper (1) und dem Kunststoffgehäuse (2) auszufüllen.

4. Verfahren nach einem der Ansprüche 1 bis 3, dadurch gekennzeichnet, daß die stirnseitigen Schoopschichten durch Schleifen, Bürsten oder Fräsen mechanisch geglättet werden, um eine geometrisch genau definierte und elektrisch einwandfreie Oberfläche der Lötkontaktschicht zu erhalten.

5. Verfahren nach Anspruch 1, **dadurch gekennzeichnet,** daß der geschoopte Kondensatorkörper (1) in das Kunststoffgehäuse (2') mit den zwei offenen gegenüberliegenden Stirnseiten (3) eingesetzt wird und daß anschließend Blechanschlußelemente (5) an dem Kunststoffgehäuse (2') befestigt und die Blechanschlußelemente (5) mit den darunterliegenden Schoopschichten verschweißt werden.

6. Verfahren nach Anspruch 5, dadurch gekennzeichnet, daß die Blechanschlußelemente (5) in schwalbenschwanzartige Hinterschneidungen (6) auf gegenüberliegenden Mantelflächen des Kunststoffgehäuses (2') eingreifen.

7. Verfahren nach Anspruch 5 oder 6, dadurch gekennzeichnet, daß der Kondensator nach dem Befestigen der Blechanschlußelemente (5) an dem Kunststoffgehäuse (2') unter Druck oder Vakuum in flüssigem Gießharz leicht imprägniert wird, um Lufteinschlüsse zwischen dem Kondensatorkörper (1) und dem Kunststoffgehäuse (2') sowie zwischen den Blechanschlußelementen (5) und dem Kunststoffgehäuse (2') auszufüllen.

## Claims

1. A process for producing an SMD plastic film capacitor with a wound or layered structure, the spray-metallized capacitor (1) of which is partially sheathed in a temperature-stable plastic casing (2) with two open opposite end faces (3) on which the solder contact layers are provided, whereby the distance between the two spray-metallized layers of the capacitor body (1) substantially corresponds to the distance between the two open opposite end faces (3) of the plastic casing (2),
**characterized in that** the spray-metallized capacitor body (1) is fitted into the plastic casing (2) with the two open opposite end faces.

2. The process according to claim 1, characterized in that subsequently both end faces of the structure (4) thus produced are once more spray-metallized.

3. The process according to claim 2, characterized in that the capacitor body, after the second spray-metalizing, is slightly impregnated in liquid casting resin under pressure or a vacuum in order to fill air inclusions between the capacitor body (1) and the plastic casing (2).

4. The process according to one of claims 1 to 3, characterized in that the spray-metallized layers at the end faces are mechanically smoothed by grinding, brushing or milling in order to obtain a geometrically exactly defined and electrically satisfactory surface of the solder contact layer.

5. The process according to claim 1, characterized in that the spray-metallized capacitor body (1) is fitted into the plastic casing (2') with the two open opposite end faces (3) and that subsequently sheet metal connecting elements (5) are fastened to the plastic casing (2') and the sheet metal connecting elements (5) are welded to spray-metallized layers lying thereunder.

6. The process according to claim 5, characterized in that the sheet metal connecting elements (5) engage in dovetail-like undercuts (6) on opposite outer surfaces of the plastic casing (2').

7. The process according to claim 5 or 6, characterized in that, after the fastening of the sheet metal connecting elements (5) to the plastic casing (2'), the capacitor is slightly impregnated in liquid casting resin under pressure or a vacuum in order to fill air inclusions between the capacitor body (1) and the plastic casing (2') as well as between the sheet metal connecting elements (5) and the plastic casing (2').

## Revendications

1. Procédé pour fabriquer un condensateur à feuille plastique pour un montage en surface SMD, sous forme bobinée ou à couches, dont le corps (1) soumis au schoopage est enveloppé partiellement dans un boîtier en matière plastique (2) stable vis-à-vis de la température, comportant deux faces frontales ouvertes opposées (3), sur lesquelles sont prévues les couches de contact de brasage, la distance entre les deux couches de schoopage du corps (1) du condensateur correspondant essentiellement à la distance entre les deux faces frontales ouvertes opposées (3) du boîtier en matière plastique (2),
caractérisé en ce que le corps (1) du condensateur, soumis au schoopage, est inséré dans le boîtier en matière plastique (2) équipé des deux faces frontales ouvertes opposées.

2. Procédé selon la revendication 1, caractérisé en ce que les deux faces frontales de la structure ainsi fabriquée (4) sont ensuite soumises à nouveau à un schoopage.

3. Procédé selon la revendication 2, caractérisé en ce qu'après le deuxième schoopage, on imprègne légèrement le corps du condensateur sous pression ou sous vide avec une résine de coulée liquide de manière à remplir les inclusions d'air entre le corps (1) du condensateur et le boîtier en matière plastique (2).

4. Procédé selon l'une des revendications 1 à 3, caractérisé en ce qu'on lisse mécaniquement les couches frontales de schoopage par meulage, brossage ou fraisage pour obtenir une surface de la couche de contact de brasage, qui est définie de façon précise du point de vue géométrique et parfaite du point de vue électrique.

5. Procédé selon la revendication 1, caractérisé en ce qu'on insère le corps (1) du condensateur, soumis au schoopage, dans le boîtier en matière plastique (2') comportant deux faces frontales opposées ouvertes (3) et qu'ensuite on fixe des éléments de raccordement en tôle (5) sur le boîtier en matière plastique (2') et qu'on soude les éléments de raccordement en tôle (5) aux couches sous-jacentes de schoopage.

6. Procédé selon la revendication 5, caractérisé en ce que les éléments de raccordement en tôle (5) s'engagent dans des parties en dépouille en queue d'aronde (6) situées sur des surfaces enveloppes opposées du boîtier en matière plastique (2').

7. Procédé selon la revendication 5 ou 6, caractérisé en ce qu'après la fixation des éléments de raccordement en tôle (5) sur le boîtier en matière plastique (2'), on imprègne le condensateur, moyennant l'application d'une pression ou d'un vide, dans une résine de coulée liquide pour remplir les inclusions d'air entre le corps (1) du condensateur et le boîtier en matière plastique (2') ainsi qu'entre les éléments de raccordement en tôle (5) et le boîtier en matière plastique (2').
